**Europäisches Patentamt**

(19) **European Patent Office**

**Office européen des brevets**

(11) Veröffentlichungsnummer: **0 023 956**
**B1**

(12) # EUROPÄISCHE PATENTSCHRIFT

(45) Veröffentlichungstag der Patentschrift:
**17.11.82**

(51) Int. Cl.³: **C 08 G 69/46, C 08 G 65/32**

(21) Anmeldenummer: **80103238.4**

(22) Anmeldetag: **11.06.80**

(54) **Verfahren zur Herstellung von Polyether(ester)amiden.**

(30) Priorität: **09.08.79 DE 2932234**

(43) Veröffentlichungstag der Anmeldung:
**18.02.81 Patentblatt 81/7**

(45) Bekanntmachung des Hinweises auf die Patenterteilung:
**17.11.82 Patentblatt 82/46**

(84) Benannte Vertragsstaaten:
**BE CH FR GB IT LI NL**

(56) Entgegenhaltungen:
**CH-A-596 251**
**DE-A-2 856 787**
**DE-B-2 405 646**

(73) Patentinhaber: **CHEMISCHE WERKE HÜLS AG,
Postfach 1320, D-4370 Marl 1 (DE)**

(72) Erfinder: **Mumcu, Salih, Dr., Bitterfelder Strasse 9a,
D-4370 Marl (DE)**
Erfinder: **Panoch, Hans Joachim, Dr, Rehwinkel 14,
D-4358 Haltern 7 (DE)**

## Verfahren zur Herstellung von Polyether(ester)amiden

Die Herstellung von Polyether(ester)amiden, auch als Block-Polyamid-Polyether(ester) bezeichnet, ist grundsätzlich bekannt.

Als Herstellungsverfahren wurden folgende Arbeitsweisen beschrieben: Polykondensation eines polyamidbildenden Monomeren, wie Lactame, $\omega$-Aminocarbonsäuren, oder äquivalente Mengen von Dicarbonsäuren und Diaminen mit einem Polyether mit endständigen Aminogruppen in Gegenwart von Dicarbonsäuren oder mit einem Polyether mit endständigen Carboxylgruppen in Gegenwart von Diaminen; Polykondensation eines Polyethers mit Polyamidoligomeren, die entweder Carboxylendgruppen oder Aminendgruppen tragen (DE-AS 1 719 235, Spalte 4; DE-OS 2 523 991; DE-OS 2 712 987; FR-PS 1 444 437; DE-OS 2 658 714).

Polyether und Polyamide sind bekanntlich nicht miteinander verträglich. Wegen der Heterogenität der Reaktionsmasse verläuft die Polykondensation sehr langsam. Außerdem gelangt man nur zu Formmassen mit hohem Extraktgehalt und relativ niedriger Molmasse, so daß keine ausreichend stabile Formkörper erhalten werden können, wie sie nach dem Spritzguß- und insbesondere Extrusionsverfahren hergestellt werden.

Auch das Anwenden von Katalysatoren, die in hohen Konzentrationen angewendet werden müssen, das Arbeiten unter vermindertem Druck oder mechanisches Mischen führt nicht zum Ziel. So sind die Produkte, welche in Gegenwart von Katalysatoren, wie Tetraalkylorthotitanat, in den erforderlich hohen Mengen bis zu 2 Gewichtsprozent hergestellt werden, nicht hydrolysestabil.

Das Anwenden von vermindertem Druck erfordert einen wesentlich höheren technischen Aufwand, kann aber die Heterogenität der Reaktionsmasse nicht beseitigen. Mechanisches Mischen, wie Rühren, ist bei fortschreitender Reaktion nur schwer oder überhaupt nicht mehr in ausreichender Weise ausführbar.

Die DE-OS 2 712 987 gibt die Lehre, daß man ohne Anwenden eines Katalysators zu relativ hohen Molmassen gelangen kann, wenn die monomeren Komponenten gleichzeitig eingesetzt werden. Diese Arbeitsweise kann noch nicht voll befriedigen, da die temperaturempfindlichen Polyether im Produktionsmaßstab einer relativ langen Temperaturbelastung ausgesetzt werden, so daß offensichtlich in geringem Maße thermische Schädigungen auftreten, die die mechanischen Eigenschaften der Polyether(ester)amide verschlechtern.

Aufgabe der Erfindung ist es, ein Verfahren bereitzustellen, welches im Produktionsmaßstab erlaubt, in wesentlich kürzerer Zeit die nicht mischbaren Polyamid- und Polyetherkomponenten in hochmolekulare Produkte zu überführen, welche die geschilderten Nachteile nicht aufweisen. Außerdem sollte mit nur geringen Mengen Katalysator oder ohne Katalysator die Reaktion ausreichend schnell ablaufen, und zudem sollte das Anwenden von Hochvakuum tunlichst vermieden werden.

Die Lösung der Aufgabe gelingt, wenn man

a) Carboxylendgruppen tragende Polyamide mit Hydroxylendgruppen und/oder Aminoendgruppen tragenden Polyethern oder

b) Aminoendgruppen tragende Polyamide mit Carboxylendgruppen tragenden Polyethern unter Normaldruck oder vermindertem Druck, gegebenenfalls in Gegenwart von Katalysatoren, polykondensiert, indem man vor der Polykondensation die Polyamide und die Polyether zunächst in Gegenwart von Wasser unter mechanischer Bewegung bei Temperaturen von 200 bis 300° C unter einem Wasserdampfdruck von 5 bis 25 bar homogenisiert und nach dem Entfernen des Wassers durch Entspannen die Polykondensation vornimmt.

Vorzugsweise arbeitet man unter einem Wasserdampfdruck von 10 bis 20 bar. Die Homogenisierungsdauer unter Wasserdampfdruck liegt im Bereich von 15 Minuten bis 4 Stunden, vorzugsweise im Bereich von 30 Minuten bis 2 Stunden.

In der Homogenisierungsstufe (Zwischenbehandlung unter Wasserdampfdruck), wird bei der angewandten Temperatur der zugehörige Sättigungsdampfdruck des Wassers nicht erreicht. Ein Teil des noch vorhandenen bzw. wieder zugesetzten Wassers wird zum Abbau der gebildeten Polyamidblöcke verbraucht.

Wesentlich ist es, daß man von dem »Polyamid« ausgeht und dieses zusammen mit dem Polyether unter Wasserdampfdruck behandelt. Das Polyamid wird unter dem Wasserdampfdruck hydrolysiert und liegt als niedriges Oligomer vor. Obwohl nach dem Entspannen die Polyamidketten zurückgebildet werden, liegt eine feine Verteilung der Polyetherkomponente vor bzw. bleibt die gebildete feine Verteilung überraschenderweise erhalten.

Unter »Polyamiden« werden verstanden: Carboxylendgruppen tragende oder Aminendgruppen tragende Polyamide bzw. Oligoamide. Das sind Polyamide, die nach bekannten Verfahren durch Regeln mit Dicarbonsäuren oder Diaminen erhalten worden sind. Mit anderen Worten ist es möglich, von vorgebildeten derartigen Polyamiden auszugehen.

**0 023 956**

Besonders vorteilhaft ist es jedoch, die »Polyamide« unter den Bedingungen der hydrolytischen Polymerisation herzustellen, wobei bei Temperaturen von 200 bis 320° C in Gegenwart von Wasser unter dem sich einstellenden Eigendruck von 5 bis 25 bar gearbeitet wird und dann zu den vorgebildeten »Polyamiden« den Polyether zuzusetzen, in dem gleichen Gefäß die notwendige Behandlung unter Wasserdampfdruck und mechanischer Bewegung vorzunehmen und schließlich nach Entfernen des Wassers die Polykondensation zu den Polyether(ester)amiden auszuführen. Der Zusatz des Polyethers kann in vielen Fällen in den unter Druck stehenden, das »Polyamid« enthaltenden Reaktor erfolgen. Es ist jedoch auch möglich, falls erforderlich, zunächst den Reaktor zu entspannen und dann den Polyether und das Wasser in den Reaktor zu geben.

Nach beendeter notwendiger Zwischenbehandlung unter Wasserdampfdruck wird das Wasser durch Entspannen entfernt und dann die Polykondensation bei Normaldruck oder vermindertem Druck von 100 bis 1 mbar, bei Temperaturen von 230 bis 300° C, vorzugsweise 250 bis 280° C, in üblicher Weise zu Ende geführt.

Falls gewünscht, kann auch in Gegenwart von bekannten Katalysatoren, wie z. B. Phosphorsäure, Zinkacetat, Calciumacetat oder Tetraalkyltitanaten gearbeitet werden, wobei man mit wesentlich geringeren Mengen auskommt. Vorzugsweise verwendet man Phosphorsäure. Die eingesetzte Menge an Katalysator beträgt 0,02 bis 0,2 Gewichtsprozent, bezogen auf die Summe der eingesetzten Polyether und Polyamide. Die Wassermenge, um den notwendigen Wasserdampfdruck einzustellen, richtet sich nach der Reaktorgröße, Temperatur, dem Füllungsgrad des Reaktors und dem molaren Verhältnis von polyamidbildenden Verbindungen, Lactame, $\omega$-Aminocarbonsäuren, Dicarbonsäuren und Diaminen und zu den als Regler eingesetzten überschüssigen Dicarbonsäuren oder Diaminen. Bei einem Füllungsgrad von etwa 50% des Reaktors liegt die Wassermenge im allgemeinen bei 1 bis 30, vorzugsweise 2 bis 20 Gewichtsprozent, bezogen auf die Menge der polyamidbildenden Verbindungen.

Der Grad der Vorkondensation der »Polyamide« wird durch den Überschuß der Dicarbonsäuren oder Diaminen bestimmt.

Folgende Komponenten werden eingesetzt:

I. Polyamidbildende Komponenten:
Lactame oder $\omega$-Aminocarbonsäuren mit 10 bis 12 Kohlenstoffatomen, äquimolare Mengen von Diaminen und Dicarbonsäuren oder auch Gemische dieser Komponenten, vorzugsweise Laurinlactam, $\omega$-Aminododecansäure, $\omega$-Aminoundecansäure, Dodecanmethylendiamin, Decandicarbonsäure.

II. Molekulargewichtsregelnde Komponenten für die Polyamide:
a) aliphatische lineare Dicarbonsäuren mit 6 bis 13 Kohlenstoffatomen, verzweigtkettige aliphatische Dicarbonsäuren mit 6 bis 13 Kohlenstoffatomen in der Kette, cycloaliphatische Dicarbonsäuren und aromatische Dicarbonsäuren mit mindestens 8 Kohlenstoffatomen oder Gemische dieser Verbindungen. Beispielsweise seien genannt: Adipinsäure, Trimethyladipinsäure, Pimelinsäure, Korksäure, Azelainsäure, Sebazinsäure, Decandicarbonsäure, Hexahydroterephthalsäure, Terephthalsäure, Isophthalsäure, Phthalsäure, Naphthalindicarbonsäure, bevorzugt Decandicarbonsäure, Hexahydroterephthalsäure und Terephthalsäure.
b) lineare aliphatische Diamine mit 6 bis 13 Kohlenstoffatomen, verzweigtkettige aliphatische Diamine mit 6 bis 13 Kohlenstoffatomen in der Kette, cycloaliphatische und aromatische Diamine oder auch Gemische dieser Verbindungen. Beispielsweise seien genannt: 5-Methyl-nonandiamin; Hexamethylendiamin; 2,4,4-Trimethylhexamethylendiamin; Dodecamethylendiamin; Isophorondiamin; m- und p-Xylylendiamin; 1,4-Bis-(aminomethyl)-cyclohexan; 4,4'-Diaminodicyclohexylmethan; 4,4'-Diaminodiphenylmethan. Bevorzugt werden Isophorondiamin, Hexamethylendiamin, Dodecamethylendiamin.

Aus den Komponenten I. und II. a) oder b) werden die »Polyamide« vorgebildet, die entweder unmittelbar durch Zusatz von Polyethern, Homogenisieren unter Wasserdampfdruck und nach Entfernen des Wassers zu Polyether(ester)amiden polykondensiert werden. Wie bereits beschrieben, kann anstelle dieses Eintopfverfahrens auch von gesondert hergestellten Polyamiden ausgegangen werden. Das mechanische Durchmischen in der Homogenisierungsstufe erfolgt vorzugsweise durch Rühren.

Die zahlenmittlere Molmasse der Polyamidblöcke, die, wie bereits erwähnt, durch den Überschuß der Komponente II bestimmt wird, läßt sich etwa durch folgende Formel darstellen:

$$M_{II} \left( 1 + \frac{m_I}{m_{II}} \right),$$

3

wobei

$$M_{II} = \text{Molmasse der Komponente II}$$
$$m_I = \text{Einsatzmenge an Komponente I (g)}$$
$$m_{II} = \text{Einsatzmenge an Komponente II (g)}$$

III. Polyether:
Homo- und/oder Copolymere des Ethylenoxid, Propylenoxid und Tetrahydrofuran oder Gemische der Homo- und/oder Copolymeren. Das Zahlenmittel der Molmasse bewegt sich von 160 bis 3000 vorzugsweise von 300 bis 2200 und insbesondere von 500 bis 1200. Sie enthalten im Falle des Einsatzes der Polyamide I. und II. a) OH- und/oder $NH_2$-Endgruppen. Im Falle des Einsatzes der Polyamide I. und II. b) Carboxylendgruppen. Bevorzugte Polyether sind die des Tetrahydrofuran.

Das Einführen der $NH_2$-Endgruppen kann nach bekannten Verfahren erfolgen, wie sie z. B. in den DE-OSS 1 570 542, 2 412 056, 2 412 057 oder der US-PS 2 401 607 beschrieben sind. Carboxylendgruppen können z. B. nach dem Verfahren der DE-OS 26 58 714 eingeführt werden.

Das Gewichtsverhältnis der Komponenten (I+II) zu III liegt bei 35 : 65 bis 95 : 5, vorzugsweise bei 40 : 60 bis 90 : 10. Das Molverhältnis von II : III bei 1 : 0,95 bis 1 : 1,10, vorzugsweise bei 1 : 1 bis 1 : 1,05.
Die Polyether(ester)amide und Polyetheramide können auch Zusatzstoffe, wie Antioxidantien, Licht- und Hitzestabilisatoren, Flammschutzmittel, Farbstoffe oder Weichmacher enthalten, die vor, während oder nach der Polykondensation zugegeben werden können.
Die Lösungsviskositäten liegen bei 1,3 bis 2,4, bevorzugt bei 1,5 bis 2,2, gemessen nach DIN 53 727 in m-Kresol bei 25° C.

Beispiel 1

280 kg Laurinlactam, 13 kg Adipinsäure und 12,6 kg Wasser wurden in einem 1 m³-Rührautoklaven unter Luftausschluß auf 270° C erhitzt, wobei sich ein Innendruck von 18 bar einstellte. Nach 7stündiger Druckphase wurde 107 kg $\alpha,\omega$-Dihydroxy-(polytetrahydrofuran) mit $\bar{M}_n = 1200$ in den unter Druck stehenden Reaktor gegeben und bei ca. 20 bar im Temperaturbereich 230 bis 270° C 2 Stunden gerührt. Der Reaktor wurde innerhalb von 2 Stunden entspannt. Die Polykondensation erfolgte bei Normaldruck unter Überleiten von 5 m³ Stickstoff pro Stunde.
In Abständen von 6 Stunden wurden der Reaktionsmasse Proben entnommen und relative Lösungsviskositäten in m-Kresol bestimmt. Folgende $\eta_{rel}$-Werte wurden gemessen:

| Polykondensationszeit (h) | $n_{rel}$ |
|---|---|
| 6 | 1,51 |
| 12 | 1,65 |
| 18 | 1,90 |

Das Endprodukt weist einen Schmelzpunkt von 168° C auf [gemessen nach der Differential-Thermo-Calorimetrie (DSC)-Methode]. Sein Extraktgehalt in heißem Ethanol beträgt 2,3 Gewichtsprozent.

Vergleichsbeispiel 1
(Verfahren gemäß FR-PS 1 444 437)

280 kg Laurinlactam, 13 kg Adipinsäure und 12,6 kg Wasser wurden in einem 1 m³-Rührautoklaven unter Luftausschluß auf 270° C erhitzt, wobei sich ein Innendruck von 18 bar einstellte. Nach 7stündiger Druckphase wurde innerhalb von 2 Stunden entspannt. Anschließend wurden 107 kg $\alpha,\omega$-Dihydroxy-(polytetrahydrofuran) mit $\bar{M}_n = 1200$ hinzugefügt und bei Normaldruck durch Überleiten von 5 m³ Stickstoff pro Stunde bei 270° C polykondensiert. In Abständen von 6 Stunden wurden der Reaktionsmasse Proben entnommen und relative Lösungsviskositäten in m-Kresol bestimmt. Folgende $\eta_{rel}$-Werte wurden erhalten:

| Polykondensationszeit (h) | $n_{rel}$ |
|---|---|
| 6 | 1,30 |
| 12 | 1,53 |
| 18 | 1,61 |
| 24 | 1,67 |
| 30 | 1,80 |

Das Endprodukt weist einen DSC-Schmelzpunkt von 168°C auf. Sein Extraktgehalt in heißem Ethanol beträgt 3,6 Gewichtsprozent.

## Beispiel 2

16 kg Laurinlactam, 0,7 kg Dodecandisäure und 750 ml Wasser wurden in einem 50-l-Rührautoklaven unter Luftausschluß auf 270°C erhitzt, wobei sich ein Innendruck von 19 bar einstellte. Nach 7stündiger Druckphase wurden 3,3 kg Polytetrahydrofurandiamin ($\overline{M}_n = 1100$) hinzugefügt, welches durch Cyanoethylierung und Hydrierung eines $\alpha,\omega$-Dihydroxy-(polytetrahydrofuran) hergestellt worden war. Bei ca. 22 bar wurde 2 Stunden im Temperaturbereich 230 bis 270°C gerührt. Der Reaktor wurde innerhalb von 2 Stunden entspannt. Die Polykondensation erfolgte bei Normaldruck unter Überleiten von 200 l Stickstoff pro Stunde. In Abständen von 4 Stunden wurden der Reaktionsmasse Proben entnommen und ihre relative Lösungsviskosität in m-Kresol bestimmt. Folgende $\eta_{rel}$-Werte wurden erhalten:

| Polykondensationszeit (h) | $n_{rel}$ |
|---|---|
| 4 | 1,53 |
| 8 | 1,85 |
| 12 | 2,05 |

Das Endprodukt weist einen Schmelzpunkt von 174°C auf (gemessen nach DSC-Methode). Sein Extraktgehalt in heißem Ethanol beträgt 1,6 Gewichtsprozent.

## Vergleichsbeispiel 2
### (Verfahren gemäß DE-AS 1 719 235)

16 kg Laurinlactam, 0,7 kg Dodecandisäure und 3,3 kg Polytetrahydrofurandiamin ($\overline{M}_n = 1100$), das durch Cyanoethylierung und Hydrierung eines $\alpha,\omega$-Dihydroxy-(polytetrahydrofuran) hergestellt wurde, wurden in einem 50-l-Rührautoklaven unter Stickstoff auf 270°C erhitzt. Nach 10 Stunden wurden 200 l Stickstoff pro Stunde übergeleitet und polykondensiert. In Abständen von 4 Stunden wurden Proben entnommen und ihre relative Lösungsviskositäten bestimmt. Folgende $\eta_{rel}$-Werte wurden erhalten:

| Polykondensationszeit (h) | $n_{rel}$ |
|---|---|
| 4 | 1,50 |
| 8 | 1,68 |
| 12 | 1,88 |

Das Endprodukt weist einen DSC-Schmelzpunkt von 170°C auf. Sein Extraktgehalt in heißem Ethanol beträgt 5,9 Gewichtsprozent.

### Beispiel 3

260 kg Laurinlactam, 20 kg Dodecandisäure und 11,7 kg Wasser wurden in einen 1 $m^3$-Rührautoklaven unter Luftausschluß auf 270°C erhitzt, wobei sich ein Innendruck von 18 bar einstellte. Nach 6stündiger Druckphase wurden 114 kg $\alpha,\omega$-Dihydroxy-(polytetrahydrofuran) mit der zahlenmittleren Molmasse von 1000 und 0,3 kg Tetraisopropylorthotitanat hinzugegeben und die Reaktionsmischung zwischen 230 und 260°C 2 Stunden gerührt. Der Reaktor wurde innerhalb von 2 Stunden entspannt, wobei die Temperatur bis auf 270°C erhöht wurde. Anschließend wurde innerhalb von 3 Stunden ein Vakuum von 20 mbar angelegt und 10 Stunden gehalten. Das erhaltene Produkt weist einen $\eta_{rel}$-Wert von 1,90 und einen DSC-Schmelzpunkt von 167°C auf. Sein Extraktgehalt in heißem Ethanol beträgt 2,2 Gewichtsprozent.

### Vergleichsbeispiel 3
### (Verfahren gemäß DE-OS 2 523 991)

260 kg Laurinlactam, 26 kg Dodecandisäure und 11,7 kg Wasser wurden in einem 1 $m^3$-Rührautoklaven unter Luftausschluß auf 270°C erhitzt, wobei sich ein Innendruck von 18 bar einstellte. Nach 6stündiger Druckphase wurde innerhalb von 2 Stunden entspannt. Man erhielt eine PA 12-Dicarbonsäure mit einer zahlenmittleren Molmasse von 2530. Zu dieser wurden 114 kg $\alpha,\omega$-Dihydroxy-(polytetrahydrofuran) mit einer zahlenmittleren Molmasse von 1000 und 2 kg Tetraisopropylorthotitanat hinzugegeben und die Reaktionsmischung innerhalb von 2 Stunden bis 270°C erwärmt. Anschließend wurde innerhalb von 3 Stunden ein Vakuum von 0,3 mbar angelegt und 10 Stunden unter diesem Vakuum polykondensiert. Das erhaltene Produkt weist einen $\eta_{rel}$-Wert von 1,92 und einen DSC-Schmelzpunkt von 167°C auf. Sein Extraktgehalt in heißem Ethanol beträgt 3,4 Gewichtsprozent.

### Beispiel 4

280 kg Laurinlactam, 25 kg Dodecandisäure und 12,6 kg Wasser wurden in einem 1 $m^3$-Rührautoklaven innerhalb von 4 Stunden auf 270°C erhitzt, wobei sich ein Innendruck von 18 bar einstellte. Nach 7stündiger Druckphase wurden 95 kg $\alpha,\omega$-Dihydroxy-(polytetrahydrofuran) mit $\overline{M}_n = 1000$ hinzugegeben und innerhalb von 2 Stunden in einem Temperaturbereich von 230 bis 260°C bei 20 bar gerührt, 2 Stunden entspannt, dabei die Temperatur bis 270°C erhöht. Es wurde bei Normaldruck unter Überleiten von Stickstoff polykondensiert. Nach 24 Stunden wurde ein Produkt mit einem $\eta_{rel}$-Wert von 1,92 erhalten. An Formkörpern wurde eine Reißfestigkeit von 30 $N/mm^2$ nach DIN 53 455 gemessen. Das Material wurde zu Folien extrudiert. Sie zeigten keine Stippen.

### Vergleichsbeispiel 4
### (Verfahren gemäß DE-OS 2 712 987)

280 kg Laurinlactam, 95 kg $\alpha,\omega$-Dihydroxy-(polytetrahydrofuran) mit $\overline{M}_n = 1000$, 25 kg Dodecandisäure und 12,6 kg Wasser wurden in einem 1 $m^3$-Rührautoklaven innerhalb von 5 Stunden auf 270°C erhitzt, wobei sich ein Innendruck von 18 bar einstellte. Nach 7stündiger Druckphase wurde innerhalb von 2 Stunden entspannt. Die Polykondensation erfolgte bei Normaldruck unter Überleiten von Stickstoff. Nach 26 Stunden wurde ein Produkt mit einem $\eta_{rel}$-Wert von 1,83 erhalten. An Formkörpern wurde nach DIN 53 455 eine Reißfestigkeit von 20 $N/mm^2$ ermittelt. Das Material wurde zu Folien extrudiert. Die Folien enthielten kleine Fischaugen, welche aus Gelpartikeln bestehen.

### Beispiel 5

8 kg $\omega$-Aminoundecansäure und 1,2 kg Hexanhydroterephthalsäure wurden unter 0,5 bar Stickstoffüberdruck in einem 50-l-Rührautoklaven auf 270°C erhitzt. Nach 3 Stunden wurden 600 ml Wasser und 11,2 kg Polyethylenoxiddiamin ($\overline{M}_n = 1620$) hinzugegeben, welche durch Cyanoethylierung und Hydrierung von Polyethylenoxidglykol hergestellt worden waren. Bei 230 bis 260°C wurde bei 17 bar Druck 1 Stunde gerührt und 2 Stunden entspannt. Die Reaktionsmasse wurde 8 Stunden bei Normaldruck unter Überleiten von Stickstoff polykondensiert. Das erhaltene Produkt wies eine relative Lösungsviskosität von 1,8 auf.

## Beispiel 6

7,46 kg Dodecandisäure und 4,65 kg Dodecamethylendiamin wurden in Gegenwart von 700 ml Wasser und 12 g 85prozentiger wäßriger Phosphorsäure in einem 50-l-Rührautoklaven auf 260°C erhitzt, wobei sich ein Innendruck von 17 bar einstellte. Nach 3stündigem Rühren wurde der Druck bis auf 10 bar entspannt. Anschließend wurden 8,2 kg $\alpha,\omega$-Dihydroxy-(polytetrahydrofuran) mit $\overline{M}_n = 860$ hinzugegeben und zwischen 230 und 260°C 2 Stunden bei ca. 12 bar gerührt. Dann wurde der Reaktor innerhalb von 1 Stunde entspannt. Bei 260°C wurde 3 Stunden Stickstoff übergeleitet, innerhalb von 2 Stunden Vakuum bis 20 mbar angelegt und 7 Stunden polykondensiert. Das Endprodukt wies eine relative Lösungsviskosität von 2,05 auf.

## Beispiele 7 bis 22

(Aus diesen Beispielen geht der Einfluß der Zeit und des Wasserdampfdrucks in der Homogenisierungsstufe auf die Polykondensationsgeschwindigkeit hervor.)

14 kg Laurinlactam, 1,27 kg Dodecandisäure und 670 ml Wasser wurden in einem 50-l-Rührautoklaven unter Luftausschluß auf 270°C erhitzt, wobei sich ein Innendruck von 20 bar einstellte. Nach 7stündiger Druckphase wurden 4,9 kg $\alpha,\omega$-Dihydroxy-(polytetrahydrofuran) mit $\overline{M}_n = 860$ bei verschiedenen Drücken (s. Tabelle) in den Reaktor gegeben und zwischen 230 und 270°C verschieden lange (s. Tabelle) gerührt. Der Druck wurde bei allen Versuchen innerhalb von 1$^1$/$_2$ Stunden entspannt. Die Reaktionsmasse wurde bei Normaldruck unter Überleiten von Stickstoff 14 Stunden polykondensiert. In der Tabelle sind die ermittelten relativen Lösungsviskositäten der Endprodukte angegeben.

| Beispiel Nr. | Druck (bar) | Zeit (h) | $n_{rel}$ |
|---|---|---|---|
| 7 | 2 | ½ | 1,60 |
| 8 | 2 | 1 | 1,62 |
| 9 | 2 | 2 | 1,66 |
| 10 | 2 | 4 | 1,68 |
| 11 | 5 | ½ | 1,65 |
| 12 | 5 | 1 | 1,68 |
| 13 | 5 | 2 | 1,72 |
| 14 | 5 | 4 | 1,76 |
| 15 | 10 | ½ | 1,88 |
| 16 | 10 | 1 | 1,93 |
| 17 | 10 | 2 | 1,95 |
| 18 | 10 | 4 | 1,95 |
| 19 | 20 | ½ | 1,93 |
| 20 | 20 | 1 | 1,95 |
| 21 | 20 | 2 | 1,95 |
| 22 | 20 | 4 | 1,96 |

7

**0 023 956**

### Beispiel 23

280 kg Laurinlactam, 23,8 kg Dodecamethylendiamin und 12,6 kg Wasser wurden in einem 1-$m^3$-Rührautoklaven unter Luftausschluß innerhalb von $4^1/_2$ Stunden auf 270°C erhitzt, wobei sich ein Innendruck von 18 bar einstellte. Nach 8stündiger Druckphase wurden 100 kg Polytetrahydrofuran mit Carboxylendgruppen (zahlenmittlere Molmasse 810) in den unter Druck stehenden Reaktor gegeben und bei ca. 20 bar im Temperaturbereich 230 bis 270°C 90 Minuten gerührt. Der Reaktor wurde innerhalb von 2 Stunden entspannt. Die Polykondensation erfolgte zunächst 5 Stunden lang unter Überleiten von Stickstoff. Dann wurde der Druck innerhalb von 2 Stunden bei auf 20 mbar reduziert und bei diesem Druck die Polykondensation 4 Stunden weitergeführt. Die Schmelze ließ sich problemlos ausfahren und nach Abkühlen granulieren. Das erhaltene Produkt wiest einen $\eta_{rel}$-Wert von 1,97 und einen Schmelzpunkt von 172°C auf [gemessen nach Differential-Thermo-Calorimetrie (DSC)]. Es enthält keine Gelpartikel.

### Vergleichsbeispiel 5
### (Verfahren gemäß DE-OS 2 658 714)

280 kg Laurinlactam, 100 kg Polytetrahydrofuran mit Carboxylendgruppen (zahlenmittlere Molmasse 810), 23,8 kg Dodecamethylendiamin und 12,6 kg Wasser wurden in einem 1 $m^3$-Rührautoklaven innerhalb von 5 Stunden auf 270°C erhitzt, wobei sich ein Innendruck von 19 bar einstellte. Nach 8stündiger Druckphase wurde innerhalb von 2 Stunden entspannt. Die Polykondensation erfolgte zunächst 5 Stunden unter Überleiten von Stickstoff. Dann wurde der Druck innerhalb von 2 Stunden bis auf 20 mbar reduziert und bei diesem Druck die Polykondensation 4 Stunden weitergeführt. Beim Ausfahren des Produktes gab es Schwierigkeiten, da der Polymerfaden unregelmäßig aus der Düse austrat und oft abriß. Das erhaltene Produkt weist einen $\eta_{rel}$-Wert von 1,85 und einen DSC-Schmelzpunkt von 172°C auf. Das Produkt enthält sehr kleine Gelpartikel, die insbesondere an Folien deutlich sichtbar werden.

### Beispiel 24

171 kg Dodecandisäure, 149 kg Dodecamethylendiamin und 13,9 kg Isophorondiamin wurden in Gegenwart von 80 kg Wasser in einem 1 $m^3$-Rührautoklaven unter Luftausschluß innerhalb von 5 Stunden auf 280°C erhitzt, wobei der Innendruck unter kontinuierlichem Entspannen bei 18 bis 20 bar gehalten wurde. Anschließend wurde der Druck innerhalb von 2 Stunden auf 10 bar reduziert. 69 kg Polytetrahydrofuran mit Carboxylendgruppen (zahlenmittlere Molmasse 810) wurden in den unter Druck stehenden Reaktor gegeben und bei ca. 12 bar im Temperaturbereich 230 bis 270°C 2 Stunden gerührt. Der Überdruck wurde innerhalb von 2 Stunden entspannt. Die Polykondensation erfolgte unter Überleiten von 5 $m^3$ Stickstoff pro Stunde. Nach 13 Stunden wurde ein Produkt mit einem $\eta_{rel}$-Wert von 1,95 erhalten. Das Material, das einen DSC-Schmelzpunkt von 176°C aufweist, wurde bei 210°C und einem Druck von 40 bar zu Preßplatten verarbeitet. An diesen wurden Torsionsschwingungsmessungen durchgeführt. Die Meßfrequenz betrug 1 Hz. Der Torsionsmodul des Materials bei 20°C beträgt 270 N $\cdot$ $mm^{-2}$, die Glasübergangstemperatur liegt bei 7°C.

**Patentanspruch**

Verfahren zur Herstellung von Polyether(ester)amiden durch Polykondensation von

a)  Carboxylendgruppen tragenden Polyamiden mit Hydroxylendgruppen und/oder Aminoendgruppen tragenden Polyethern oder
b)  Aminoendgruppen tragenden Polyamiden mit Carboxylendgruppen tragenden Polyethern durch Polykondensation unter Normaldruck oder vermindertem Druck, gegebenenfalls in Gegenwart von Katalysatoren,

dadurch gekennzeichnet, daß man die Endgruppen tragenden Polyamide und die Endgruppen tragenden Polyether zunächst in Gegenwart von Wasser unter mechanischer Bewegung bei Temperaturen von 200 bis 300°C, unter einem Wasserdampfdruck von 5 bis 25 bar homogenisiert und nach dem Entfernen des Wassers durch Entspannen die Polykondensation vornimmt.

8

## 0 023 956

### Claim

A process for the production of a polyether(ester)amide by polycondensation of

(a)  a polyamide having carboxyl end groups with a polyether having hydroxyl and/or amino end groups, or
(b)  a polyamide having amino end groups with a polyether having carboxyl end groups,

the polycondensation being carried out under atmospheric pressure or reduced pressure, optionally in the presence of a catalyst, characterized in that the polyamide bearing end groups and the polyether bearing end groups are first homogenised in the presence of water at a temperature of 200 to 300° C at a water vapour pressure of 5 to 25 bars with mechanical stirring, and the polycondensation proceeds after removal of the water by releasing the pressure.

### Revendication

Procédé de préparation de poly-éther(ester)amides par polycondensation

a)  de polyamides portant des groupes terminaux carboxyle avec des poly-éthers portant des groupes terminaux hydroxyle et/ou des groupes terminaux amino, ou
b)  de polyamides portant des groupes terminaux amino avec des poly-éthers portant des groupes terminaux carboxyle,

par polycondensation sous la pression normale ou sous pression réduite, le cas échéant en présence de catalyseurs, ledit procédé étant caractérisé par le fait qu'on homogénéise d'abord les polyamides portant des groupes terminaux et les poly-éthers portant des groupes terminaux, en présence d'eau, en agitant mécaniquement a des temperatures de 200 à 300°C, sous une pression de vapeur d'eau de 5 à 25 bar, et qu'on effectue la polycondensation après avoir éliminé l'eau par détente.